# EUROPEAN PATENT SPECIFICATION

(11) **EP 0 738 581 B1**
(45) Date of publication and mention of the grant of the patent: **12.06.2002**
(21) Application number: 94906415.8
(22) Date of filing: 04.02.1994
(51) Int. Cl.: B29C 63/34, F16L 58/10

(54) **LINING FOR THE INNER SURFACE OF A PIPE AND METHOD OF APPLYING THE SAME**
INNENAUSKLEIDUNG EINES ROHRS UND VERFAHREN ZUM AUFBRINGEN DIESER INNENAUSKLEIDUNG
REVETEMENT DESTINE A LA SURFACE INTERIEURE D'UNE CONDUITE ET SON PROCEDE D'APPLICATION

(30) Priority: 30.12.1993 RU 93057624
(43) Date of publication of application: 23.10.1996
(73) Proprietor: MOSKOVSKOE GOSUDARSTVENNOE PREDPRIYATIE "MOSVODOKANAL", Moscow 107005 (RU)
(72) Inventor: KHRAMENKOV, Stanislav Vladimirovich, Moscow, 117420 (RU); ZAGORSKY, Vladimir Alexandrovich, Moscow, 103473 (RU); PAVLOV, Evgeny Petrovich, Moscow, 125171 (RU); KLYGIN, Vladimir Nikolaevich, Moscow, 127411 (RU); LOSKUTOVA, Lidia Nikolaevna, Moskovskaya obl., 141551 (RU)
(74) Representative: Pohlmann, Eckart, Dipl.-Phys.
(86) International application number: RU9400020
(87) International publication number: WO9518007

(56) References cited:
- EP-A- 0 100 029
- EP-A- 0 260 341
- EP-A- 0 267 742
- EP-A- 0 329 529
- EP-A- 0 525 509
- WO-A-93/15131
- BE-A- 1 003 345
- FR-A- 2 592 457

## Description

### Technical Field

The present invention relates in general to construction practice, namely, to protection of an internal piping surface from mechanical damage, corrosion, or formation of undesirable deposits, and more specifically it concerns coatings for the internal surface of a piping and methods for applying said coatings to such surfaces.

### Background Art

Known in the present state of the art is a coating for an internal piping surface, which is in fact a two-layer structure, comprising coaxially arranged a binder-impregnated reinforcing layer which is in an intimate contact with the internal piping surface, and a tubular polymer envelope (FR, A, 2,482,258).

One prior-art method for applying said coating to the internal surface of a piping, consisting in that a reinforcing layer aimed at adjoining immediately the internal piping surface, and a tubular polymer envelope are arranged coaxially with each other outside the piping, and the reinforcing layer is impregnated with a binder to produce a two-layer coating structure, whereupon the thus-obtained two-layer coating structure is inserted into the piping after which the space of the tubular envelope is hermetically sealed, and the entire two-layer coating structure is heat-treated (cf. ibid.).

When inserting said coating into the piping, the continuity of the coating may be disturbed, thus impairing the quality of the latter.

A coating for an internal piping surface defined in the preamble of claim 1 and comprising two coaxially arranged tubular envelopes made of a polyethylene-containing film, one of which, i.e., the outer one, adjoins the internal piping surface, while the other envelope, viz, the inner one, is isolated from the outer envelope with a binder-impregnated coaxial reinforcing layer is known from RU,A,2,000,513.

The inner envelope of the aforediscussed coating adjoins freely the reinforcing layer, which leads to its high deformability and hence to a low quality of the coating.

A method for applying said coating to the internal surface of a piping defined in the preamble of claim 14 and consisting in that two tubular envelopes made of a polyethylene-containing film are arranged coaxially with each other outside the piping, one of said envelopes, that is, the outer one, being aimed at adjoining the internal piping surface, and the other envelope, i.e., the inner one is isolated from the outer envelope with a binder-impregnated reinforcing layer is known from EP 267742.

When applying the aforediscussed coating to the internal surface of a piping, using the aforesaid method, the inner envelope comes, due to its freely adjoining the reinforcing layer in a direct contact with a flow liquid conveyed by the piping in the course of its operation. No adhesion between said envelope and the reinforcing layer causes the film of the envelope to wrinkle or crease and results in a turbulent change of the flow of liquid being conveyed, an increased power consumption for the liquid conveyance, and a reduced service life of the envelope and hence of the coating as a whole.

### Disclosure of the Invention

The present invention has for its principal object to provide a coating for the internal surface of a piping, which features such a structure that adds much to the quality of the coating, and to develop a method for applying said coating to the internal surface of a piping, according to which method said coating is so applied as to ensure against a turbulent change in the flow of liquid conveyed along the piping, reduce power consumption for the liquid conveyance, and prolong service life of the envelope and hence of the coating as a whole.

The foregoing object is accomplished due to the fact that in a coating for the internal surface of a piping, which coating appears as a triple-layer structure, comprising two coaxially arranged tubular envelopes made of a polyethylene-containing film, one of said envelopes (the outer one) adjoining the internal piping surface, and the other envelope (the inner one) is isolated from the outer envelope with a binder-impregnated reinforcing layer, according to the invention, at least said inner envelope made of a polyethylene-containing film incorporates a cross-linking agent by which the inner envelope is rigidly coupled to the reinforcing layer through cross chemical bonds formed from the two adjacent layers.

The polyethylene-containing film of the outer envelope may also contain an adhesive.

The polyethylene-containing film of the inner envelope may also contain an adhesive.

It is desirable that used as the cross-linking agent is a peroxide of organic substances taken in an amount of 0.5-3 wt.% of the weight of the polyethylene containing film.

Whenever a polyester binder is used, it may contain a peroxide of organic compounds taken in an amount of 0.5-3 wt.% of the binder weight.

It is expedient that used as the peroxide of organic compounds is benzoyl peroxide, or dicumyl peroxide, or lauryl peroxide.

Used as the cross-linking agent may be an unsaturated silane taken in an amount of 0.5-15 wt.% of the weight of the polyethylene-containing film.

It is also expedient that used as the unsaturated silane is vinyltriethoxysilane or vinyltrimethoxysilane.

It is desirable that used as the adhesive is an ethylene copolymer taken in an amount of 3-8 wt.% of the weight of the polyethylene-containing film.

The foregoing object is accomplished also due to the fact that in a method for applying the aforesaid coating to the internal surface of a piping, consisting in that two tubular envelopes made of a polyethylene-containing film are arranged coaxially with each other outside the piping, one of said envelopes, that is, the outer one, being aimed at adjoining the internal piping surface, and the other envelope, i.e., the inner one is isolated from the outer envelope with a coaxial reinforcing layer which is then impregnated with a binder to obtain a triple-layer coating structure, whereupon the thus-obtained triple-layer coating structure is inserted into the piping, after which the space of the inner envelope is hermetically sealed, and the entire triple-layer coating structure is heat-treated, according to the invention, the inner envelope is made from a polyethylene-containing film incorporating a cross-linking agent for rigidly coupling the inner envelope to the reinforcing layer through cross chemical bonds formed from the two adjacent layers, and the triple-layer coating structure is heat-treated at 85-120°C and a pressure of 0.005-0.075 MPa for a period of time long enough for cross chemical bonds to form between the inner envelope and the reinforcing layer.

It is expedient that heat-treatment is carried out at a temperature of from 85° to 120° C and a pressure of from 0.005 to 0.075 MPa, since otherwise the duration of the binder curing process is increased (when the temperature and pressure are below the lower limit) or the resultant coating is inhomogeneous due to nonuniform curing of the binder when the temperature and pressure are above the upper limit).

It is desirable that heat-treatment is performed in two stages and that the pressure at the first stage is maintained within 0.005 and 0.035 MPa for 5-30 min, and at the second stage, within 0.045-0.075 MPa for 2.5-5.5 h.

Used as the cross-linking agent may be a peroxide of organic compounds taken in an amount of 0.5-3 wt.% of the weight of the polyethylene-containing film the inner envelope is made from.

Whenever a polyester binder is used, it may contain a peroxide of organic compounds taken in an amount of 0.5-3 wt.% of the binder weight.

The amount of the peroxide of organic compounds below the lower limit (0.5 wt.%) and above the upper limit (3 wt.%) is not recommended to be used both in the aforedescribed coating and in the method for applying same, according to the invention, since in the former case the amount of said peroxide is inadequate for the cross-linking process, whereby a uniform homogenization is hard to attain, whereas in the latter case there is an excess of said peroxide resulting in an inhomogeneous material.

It is expedient that used as the peroxide of organic compounds is benzoyl peroxide, or dicumyl peroxide, or lauryl peroxide.

It is desirable that used as the cross-linking agent is an unsaturated silane taken in an amount of 0.5-15 wt.% of the weight of the polyethylene-containing film the inner envelope is made from.

The amount of the unsaturated silanes below the aforestated lower limit (0.5 wt.%) and above the aforementioned upper limit (15 wt.%) is not recommended to be used both in the aforedescribed coating and in the method for applying same, according to the invention, since in the former case the amount of said unsaturated silane is inadequate for the cross-linking process, whereby a uniform homogenization is hard to attain, whereas in the latter case there is an excess of said unsaturated silane resulting in an inhomogeneous material.

Used as the unsaturated silane may be vinyltriethoxysilane or vinyltrimethoxysilane.

It is desirable that the outer envelope polyethylene-containing film incorporates an adhesive.

Used as the adhesive may be an ethylene copolymer taken in an amount of 3-8 wt.% of the weight of the inner envelope polyethylene-containing film.

The amount of the ethylene copolymer below the aforestated lower limit (3 wt.%) and above the aforementioned upper limit (8 wt.%) is not recommended to be used both in the aforedescribed coating and in the method for applying same, according to the invention, since in the former case the amount of said ethylene copolymer is inadequate for cementing, and in the latter case there is an excess of said ethylene copolymer resulting in an inhomogeneous material.

It is preferable that when applying a coating use is made of benzoyl peroxide taken in an amount of 1.5 wt.%, or dicumyl peroxide taken in an amount of 0.5 wt.%, or lauryl peroxide taken in an amount of 3 wt.%, and that at the first stage of the heat-treatment process the heat-transfer agent, that is, saturated steam has a temperature of 101°, 105°, 107°C and a pressure of 0.001, 0.005, 0.02 MPa for 5, 10, and 15 min, respectively, and at the second stage of said process said heat-transfer agent has a temperature of 101°, 105°, 107°C and a pressure of 0.045, 0.075, 0.06 MPa for 4, 5.5, and 5 h, respectively.

It is also preferable that when applying a coating use is made of vinyltriethoxysilane taken in an amount of 5 wt.%, or vinyltrimethoxysilane taken in an amount of 0.5 wt.%, and that at the first stage of the heat-treatment process the heat-transfer agent, that is, saturated steam has a temperature of 105°, 107°C and a pressure of 0.005, 0.02 MPa for 10 and 20 min, respectively, and at the second stage of said process said heat-transfer agent has a temperature of 105°, 107°C and a pressure of 0.075, 0.06 MPa for 5.5 and 5 h, respectively.

It is also preferable that when applying a coating use is made of benzoyl peroxide taken in an amount of 1.5 wt.% and an ethylene-butylene copolymer taken in an amount of 8 wt.%, and that at the first stage of the heat-treatment process the heat-transfer agent, that is, saturated steam has a temperature of 101°C and a pressure of 0.001 MPa for 5 min, and at the second stage of said process said heat-transfer agent has a temperature of 101°C and a pressure of 0.045 MPa for 4 h.

The advantageous features of the herein-proposed coating and the method for applying said coating, according to the invention, reside in a considerably enhanced quality of the coating due to a strong adhesion bonding established between the film of the inner (outer) envelope and the binder-impregnated reinforcing layer, which is attained due to adding chemically active components to the film of the inner (outer) envelope, which components provide for cross-linking of the film material in the course of heat-treatment of the binder. All this, in turn, reduces power consumption for conveying a liquid along the piping, adds to the service life of the inner envelope and hence to that of the coating as a whole.

### Brief Description of the Drawings

In what follows the invention is illustrated in a description of some specific exemplary embodiments thereof taken in conjunction with the accompanying drawings, wherein:
FIG. 1 is a cross-sectional view of the coating proposed herein and applied to the internal surface of a piping, using the method, according to the invention;
FIG.2 is a perspective view of a piping provided with the coating of FIG. 1 applied thereto;
FIG.3 is a longitudinal sectional view of a segment of the piping of FIG.2 under repair, provided with the coating applied thereto, according to the invention; and
FIG.4 is a scaled-up longitudinal sectional view of the segment of the piping of FIG.3 under repair.

### Best Methods of Carrying Out the Invention

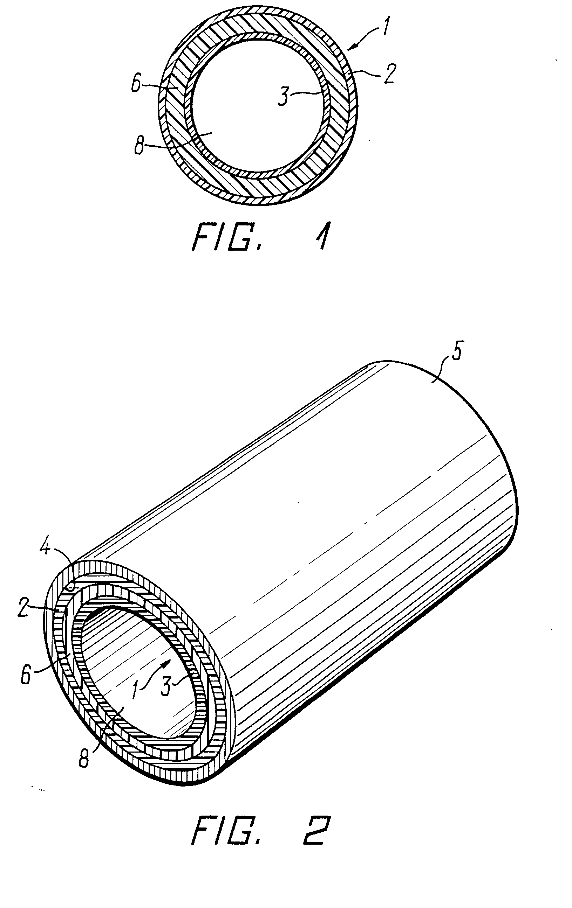

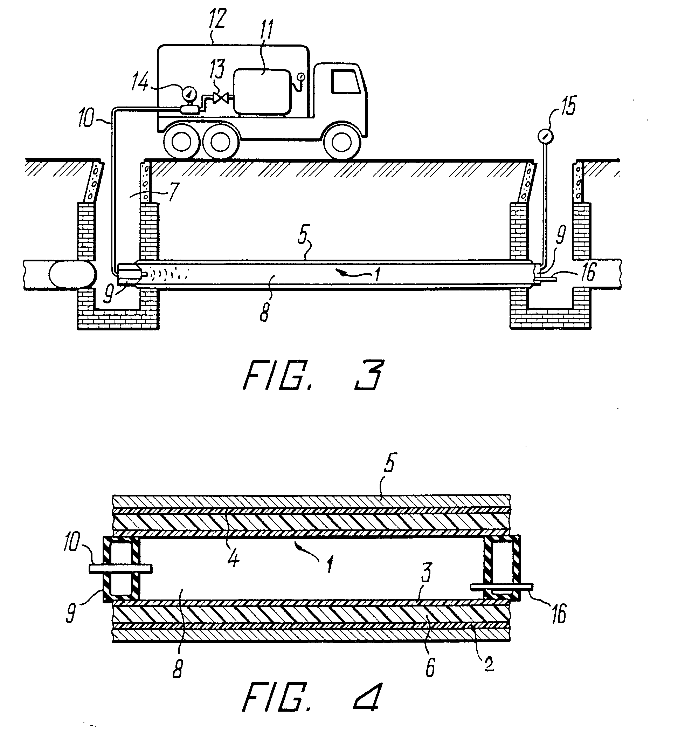

The coating of the internal surface of a piping, according to the invention, is in fact a triple-layer structure 1 (FIG.1), comprising two coaxially arranged tubular envelopes 2 and 3 made of a polyethylene-containing film, one of which, viz, an outer envelope 2 adjoins an internal surface 4 (FIG.2) of a piping 5, and another, inner envelope 3 (FIG.1) is isolated from the envelope 2 with a binder-impregnated coaxial reinforcing layer 6.

In the herein-described embodiment of the coating, the inner envelope 3 made of a polyethylene-containing film is rigidly coupled to the reinforcing layer 6 through cross chemical bonds.

Used as the polyethylene-containing film of the outer envelope 2 may be an extensively known low-density polyethylene, as that of the inner envelope 3 may be an extensively known low-density polyethylene or a mixture of the extensively known low-density polyethylene and propylene, as the reinforcing layer 6 may be a complex vitreous material closed at both sides with fiberglass fabric or a synthetic material from lavsan fibres, and as the binder, a polyester one.

The polyethylene-containing film of the inner envelope 3 incorporates a cross-linking agent capable of establishing cross chemical bonds together with the binder.

According to one of the embodiments of the proposed coating, used as the cross-linking agent is a peroxide of organic compounds taken in an amount of 0.5-3 wt.% of the weight of the polyethylene-containing film of the inner envelope 3.

Used as the peroxide of organic compounds may be benzoyl peroxide, or dicumyl peroxide, or lauryl peroxide.

When using a polyester binder it contains a peroxide of organic compounds taken in an amount of 0.5-3 wt.% of the binder weight, and used as a peroxide of organic compounds may be benzoyl peroxide, or dicumyl peroxide, or lauryl peroxide.

In another embodiment of the proposed coating used as the cross-linking agent is an unsaturated silane taken in an amount of 0.5-15 wt.% of the weight of the polyethylene-containing film of the inner envelope 3.

Used as the unsaturated silane may be vinyltriethoxysilane or vinyltrimethoxysilane.

Furthermore, provision is made for an embodiment of the proposed coating, wherein the polyethylene-containing film of the inner envelope 3 incorporates also an adhesive, e.g., an ethylene copolymer in an amount of 3-8 wt.% of the weight of the polyethylene-containing film of the inner envelope 3.

Described hereinbefore has been the proposed coating, wherein the inner envelope 3 is rigidly coupled to the reinforcing layer 6. It is however well to remember that the outer envelope 2 (FIG.1) can be rigidly coupled, likewise the inner envelope 3, to the reinforcing layer 6 by means of cross chemical bonds. To this end, the polyethylene-containing film of the outer envelope 2, as well as the polyethylene-containing film of the inner envelope 3, incorporates a cross-linking agent capable of forming cross chemical bonds with the binder.

Used as a cross-linking agent may be a peroxide of organic compounds, or an unsaturated silane taken in the same amounts with respect to the weight of the film of the outer envelope 2 as described with reference to the inner envelope 3.

Used as the peroxide of organic compounds may be benzoyl peroxide, or dicumyl peroxide, or lauryl peroxide, and used as the unsaturated silane may be vinyltriethoxysilane or vinyltrimethoxysi-lane.

The polyethylene-containing film of the outer envelope 2, as well as the polyethylene-containing film of the inner envelope 3 may also incorporate an adhesive, e.g., an ethylene copolymer taken in an amount of 3-8 wt.% of the weight of the film of the outer envelope 2.

The herein-proposed method for applying the aforedisclosed coating to the internal surface of a piping will be described hereinbelow in detail.

The herein-proposed method consists in that the tubular envelopes 2 (FIG. 1) and 3 made of a polyethylene-containing film, are arranged coaxially with each other outside the piping 5 under repair (or being laid anew), the envelope 2 (the outer one as has been described before) being aimed at adjoining the internal surface 4 (FIG.2) of the piping 5, while the other (inner) envelope 3 (FIG.1) is isolated from the outer envelope 2 with the coaxial reinforcing layer 6 which is impregnated with a binder to produce the triple-layer coating structure 1. Next the thus-produced triple-layer coating structure 1 (FIG.3) is inserted into the piping 5 through pits 7 using any technique extensively known to those skilled in the art, e.g., with the aid of a cable and a winch (both being omitted in the drawing).

Thereupon a space 8 of the inner envelope 3 (FIG.4) is hermetically sealed by means of stopper plugs 9, compressed air is fed for the inner envelope 3 to inflate, and the triple-layer coating structure 1 is heat-treated, said triple-layer coating structure 1 using a polyethylene-containing film incorporating a cross-linking agent, as its inner envelope 3 (FIG.4). Heat-treatment is performed at a temperature of 85-120°C and a pressure of 0.005-0.075 MPa for a period of time long enough for cross chemical binds to form between the inner envelope 3 and the reinforcing layer 6.

When heat treating the structure 1 used as the heat-transfer agent may be any such agent suitable for the purpose, e.g., saturated steam, hot water, or superheated steam . The heat-transfer agent is fed inside the space 8 (FIG.3), using any technique known commonly to those skilled in the art, e.g., in such a way as presented in FIG.3 and hereinbelow described in detail. First compressed air, then the heat-transfer agent are fed to the space 8 along a pipe 10 having one of its ends connected to a source 11 of the heat-transfer agent, said source being carried by a truck 12, while the opposite end of the pipe 10 runs into the space 8 through one of the stopper plugs 9. Pressure is controlled by a control valve 13 and monitored against pressure gauges 14 and 15. Condensate is removed from the space 8 along a pipe 16 brought out through the other stopper plug 9.

The heat-treatment procedure is carried out in two stages, the pressure at the first stage being maintained within 0.005 and 0.035 MPa for 5-30 min, and at the second stage, within 0.045-0.075 MPa for 2.5-5.5 h for the final structurization step - curing to terminate.

According to one of the embodiments of the herein-proposed method, used as the cross-linking agent is a peroxide of organic compounds taken in an amount of 0.5-3 wt.% of the weight of the polyethylene-containing film of the inner envelope 3 (FIG. 1).

Used as the peroxide of organic compounds is benzoyl peroxide, or dicumyl peroxide, or lauryl peroxide.

Whenever a polyester binder is used, it contains a peroxide of organic compounds taken in an amount of 0.5-3 wt.% of the binder weight, wherein benzoyl peroxide, or dicumyl peroxide, or lauryl peroxide may be used as the peroxide of organic compounds.

In an alternative embodiment of the herein-proposed method for applying the herein-proposed coating used as the cross-linking agent is an unsaturated silane taken in an amount of 0.5-15 wt.% of the weight of the polyethylene-containing film of the inner envelope 3.

Used as the unsaturated silane may be vinyltriethoxysilane or vinyltrimethoxysilane.

Furthermore, according to one more embodiment of the herein-proposed method for applying the coating, according to the invention, the polyethylene-containing film of the outer envelope 3 incorporates also an adhesive, in the capacity of which may be used an ethylene copolymer taken in an amount of 3-8 wt.% of the weight of the polyethylene-containing film of the inner envelope 3.

To promote understanding of the present invention, given below are some specific examples of practical embodiment of the herein-proposed coating and of the method, according to the invention.

### Example 1

The tubular envelopes 2 (FIG.1) and 3 made of a polyethylene-containing film, are arranged coaxially with each other outside the piping 5 (FIG.3), the envelope 2 being made of low-density polyethylene and the envelope 3, of low-density polyethylene, containing a cross-linking agent, i.e., benzoyl peroxide taken in an amount of 1.5 wt.% of the film weight.

Then the coaxial reinforcing layer 6 is interposed between the envelopes 2 and 3, said layer being made of a complex vitreous material closed at both sides with fiberglass fabric, and is impregnated with a binder having the following composition: polyester resin, 98 wt.%; tertbutyl perbenzoate, 1.5 wt.%; a 50% benzoyl peroxide paste in dibutylphthalate, 0.5 wt.%.

The result is the triple-layer coating structure 1 which is then inserted into the repaired segment of the piping 5 (FIG.3) through the pits 7 using a winch and cable.

Thereupon the space 8 of the inner envelope 3 (FIG.4) is hermetically sealed by means of the stopper plugs 9, compressed air is fed for the inner envelope 3 to inflate, and the triple-layer coating structure 1 is heat-treated. To this end, a heat-transfer agent, that is, saturated steam, is fed along the pipe 10, and the heat-treatment procedure is carried out in two stages: at the first stage the heat-transfer agent is fed under the following conditions: a temperature of 101°C and a pressure of 0.01 MPa for 5 min, and at the second stage, at a temperature of 101°C and a pressure of 0.045 MPa for 4 h for the curing process to terminate.

Thus, it is during the process of heat-treatment of the structure 1 that the curing process of the inner envelope 3 occurs, causing formation of cross chemical bonds with the material of the binder, with the result that a rigid coupling of the inner envelope 3 to the reinforcing layer 6 is formed as shown in FIG.2. This in turn leads to a much improved quality of the resultant coating and hence to a considerably reduced power consumption for liquid conveying along the piping and to an extended service life of the coating.

### Example 2

The process is conducted as in Example 1.

The polyethylene-containing film of the outer envelope 2 (FIG.1) and of the inner envelope 3, as well as the heat-transfer agent are the same as in Example 1.

Used as the binder is polyester resin containing 0.5 wt.% of dicumyl peroxide.

Used as the reinforcing layer 6 is synthetic felt made from polyethyleneterephthalate fibres.

Used as the cross-linking agent is dicumyl peroxide taken in an amount of 0.5 wt.% of the film weight.

The first-stage conditions of the process are as follows:
temperature, 105°C; pressure, 0.005 MPa; time, 10 min.

The second-stage conditions of the process are as follows:
emperature, 105°C; pressure, 0.075 MPa; time, 5.5 h.

The result obtained is the same as in Example 1.

### Example 3

The process is conducted as in Example 1.

The polyethylene-containing film of the outer envelope 2 (FIG.1), the reinforcing layer 6, and the heat-transfer agent are the same as in Example 1.

Used as the polyethylene-containing film of the inner envelope 3 is a mixture of low-density polyethylene and polypropylene taken in a ratio of 20:80, and as the cross-linking agent, lauryl peroxide taken in an amount of 3 wt.% of the film weight.

The first-stage conditions of the process are as follows:
temperature, 107°C; pressure, 0.02 MPa; time, 20 min.

The second-stage conditions of the process are as follows:
temperature, 107°C; pressure, 0.06 MPa; time, 5 h.

The result obtained is the same as in Example 1.

### Example 4

The process is conducted as in Example 1.

The material of the coating is the same as in Example 1, and the outer envelope 2 (FIG.1) is similar to the inner envelope 3.

The result obtained is the same as in Example 1 but the resultant coating features a rigid coupling between the outer envelope 2 and the reinforcing layer 6.

### Example 5

The process is carried out as in Example 1 but heat-treatment is performed under the conditions described in Example 3.

The material of the coating is the same as in Example 1 but used as the cross-linking agent is an unsaturated silane taken in an amount of 0.5 wt.% of the weight of the film of the envelope 3 (FIG.1).

The result obtained is the same as in Example 1.

### Example 6

The process is conducted as in Example 2.

Used as the cross-linking agent is an unsaturated silane, viz, vinyltriethoxysilane taken in an amount of 10 wt.% of the film weight.

The result obtained is the same as in Example 2.

### Example 7

The process is effected as in Example 1 but heat-treatment is carried out under the conditions specified in Example 2.

Used as the cross-linking agent is an unsaturated silane, viz, vinyltriethoxysilane taken in an amount of 15 wt.% of the film weight.

The result obtained is the same as in Example 1.

### Example 8

The process is conducted as in Example 1.

The material of the coating is the same as in Example I but benzoyl peroxide is taken in an amount of 2 wt.% of the weight of the film of the inner envelope 3 (FIG. 1).

Used as the heat-transfer agent is hot water.

At the first stage of the heat-treatment process the temperature is maintained at 85°C, the pressure, at 0.02 MPa for a period of 0.5 h, and at the second stage the temperature is maintained at 85°C, the pressure, at 0.04 MPa for a period of 5.5 h.

The result obtained is the same as in Example 1.

### Example 9

The process is conducted as in Example 1.

The material of the coating is the same as in Example 1 but the cross-linking agent is the same as in Example 3.

Superheated steam is used as the heat-transfer agent.

At the first stage of the heat-treatment process the temperature is maintained at 120°C, the pressure, at 0.035 MPa for 20 min, and at the second stage the temperature is maintained at 120°C, the pressure, at 0.045 MPa for 2.5 h.

The result obtained is the same as in Example 1.

### Example 10

The process is conducted as in Example 1.

The material of the coating and the heat-transfer agent are the same as in Example 1 but used as the reinforcing layer 6 (FIG.1) is a synthetic material made from lavsan fibres, and the polyethylene-containing film of the inner envelope 3 incorporates also an adhesive, i.e., an ethylene-vinylacetate copolymer taken in an amount of 3 wt.% of the film weight.

The proposed coating is heat-treated under the conditions of Example 2.

The result obtained is the same as in Example 1.

### Example 11

The process is conducted as in Example 1.

The material of the coating is similar to that described in Example 1 save the material of the outer envelope 2 (FIG.1) which is in fact the material of the outer envelope 2 described in Example 3.

In addition, used as the adhesive is an ethylene-butylene copolymer taken in an amount of 8 wt.% of the weight of the film of the envelope 3.

The result obtained is the same as in Example 1.

### Example 12

The process is conducted as in Example 1.

Used as the cross-linking agent is lauryl peroxide as in Example 3.

Used as the adhesive is an ethylene-vinylacetate copolymer taken in an amount of 5 wt.% of the film weight.

The result obtained is the same as in Example 1.

Stated hereinbefore has been Example 4, wherein the outer envelope 2 (FIG.1) and the inner envelope 3 are similar in construction.

One has however to note that the outer envelope 2 may be constructed similarly to the inner envelope 3 as described in Examples 1-3 and 5-12.

Thus, the coating proposed herein features a higher quality and an extended service life. When applied to the internal surface of a piping by the proposed method the coating reduces much power consumption for conveying a liquid along a piping.

### Industrial Applicability

The present invention can find application in constructing various pipings, as well as for repairs of pipelines in service.

## Claims

1. A coating of the internal surface of a piping, appearing as a triple-layer structure (1), comprising two coaxially arranged tubular envelopes (2, 3) made of a polyethylene-containing film, one of said envelopes, viz, the outer one (2) adjoining an internal surface (4) of a piping (5), and the other envelope, the inner one (3) is isolated from the outer envelope with a binder-impregnated reinforcing layer (6), CHARCTERIZED in that at least the inner envelope (3) made of a polyethylene-containing film incorporates a cross-linking agent by which the inner envelope (3) is rigidly coupled to the reinforcing layer (6) through cross chemical bonds formed from the two adjacent layers.

2. A coating as set forth in claim 1, **CHARACTERIZED in that** the polyethylene-containing film of the outer envelope (3) contains a cross-linking agent capable of establishing cross chemical bonds with the binder.

3. A coating as set forth in claim 1, **CHARACTERIZED in that** the polyethylene-containing film of the inner envelope (3) incorporates also an adhesive.

4. A coating as set forth in claim 2, **CHARACTERIZED in that** the polyethylene-containing film of the outer envelope (2) incorporates also an adhesive.

5. A coating as set forth in claim 1, **CHARACTERIZED in that** used as the cross-linking agent is a peroxide of organic substances taken in an amount of 0.5-3 wt.% of the weight of the polyethylene-containing film.

6. A coating as set forth in claim 2, **CHARACTERIZED in that** used as the cross-linking agent is a peroxide of organic substances taken in an amount of 0.5-3 w% of the weight of the polyethylene-containing film.

7. A coating as set forth in claim 5 or 6, **CHARACTERIZED in that** the binder contains a peroxide of organic compounds taken in an amount of 0.5-3 wt.% of the binder weight.

8. A coating as set forth in claim 5 or 6, **CHARACTERIZED in that** used as the peroxide of organic compounds is benzoyl peroxide, or dicumyl peroxide, or lauryl peroxide.

9. A coating as set forth in claim 7, **CHARACTERIZED in that** used as the peroxide of organic compounds is benzoyl peroxide, or dicumyl peroxide, or lauryl peroxide.

10. A coating as set forth in claim 1, **CHARACTERIZED in that** used as the cross-linking agent is an unsaturated silane taken in an amount of 0.5-15 wt.% of the weight of the polyethylene-containing film.

11. A coating as set forth in claim 2, **CHARACTERIZED in that** used as the cross-linking agent is an unsaturated silane taken in an amount of 0.5-15 wt.% of the weight of the polyethylene-containing film.

12. A coating as set forth in claim 10 or 11, **CHARACTERIZED in that** used as the unsaturated silane is vinyltriethoxysilane or vinyltrimethoxysilane.

13. A coating as set forth in claim 3 or 4, **CHARACTERIZED in that** used as the adhesive is an ethylene copolymer taken in an amount of 3-8 wt% of the weight of the polyethylene-containing film.

14. A method for applying a coating to the internal surface of a piping, consisting in that tubular envelopes (2, 3) made of a polyethylene-containing film are arranged coaxially with each other outside a piping (5), one of the envelopes, that is, an outer one (2), is aimed at adjoining an internal surface (4) of the piping (5), an another envelope, i.e., an inner one (3) is isolated from the outer envelope with a coaxial reinforcing layer (6) which is then impregnated with a binder to obtain a triple-layer coating structure (1), whereupon the thus-obtained triple-layer coating structure (1) is inserted into the piping (5), after which a space (8) of the inner envelope (3) is hermetically sealed, and the entire triple-layer coating structure (1) is heat-treated, **CHARACTERIZED in that** the inner envelope (3) is made from a polyethylene-containing film incorporating a cross-linking agent for rigidly coupling the inner envelope (3) to the reinforcing layer (6) through cross chemical bonds formed from the two adjacent layers and the triple-layer coating structure (1) is heat-treated at a temperature of 85-120°C and a pressure of 0.005-0.075 MPa for a period of time long enough for cross chemical bonds to form between the inner envelope (3) and the reinforcing layer (6).

15. A method as set forth in claim 14, **CHARACTERIZED in that** the heat-treatment procedure is performed in two stages and that the pressure at the first stage is maintained within 0.005 and 0.035 MPa for 5-30 min, and at the second stage, within 0.045-0.075 MPa for 2.5-5.5 h.

16. A method as set forth in claim 15, **CHARACTERIZED in that** used as the cross-linking agent is a peroxide of organic substances taken in an amount of 0.5-3 wt.% of the weight of the polyethylene-containing film of the inner envelope.

17. A method as set forth in claim 15, **CHARACTERIZED in that** the binder contains a peroxide of organic compounds taken in an amount of 0.5-3 wt.% of the binder weight.

18. A method as set forth in claim 16 or 17, **CHARACTERIZED in that** used as the peroxide of organic compounds is benzoyl peroxide, or dicumyl peroxide, or lauryl peroxide.

19. A method as set forth in claim 15, **CHARACTERIZED in that** used as the cross-linking agent is an unsaturated silane taken in an amount of 0.5-15 wt.% of the weight of the polyethylene-containing film.

20. A method as set forth in claim 19, **CHARACTERIZED in that** used as the unsaturated silane is vinyltriethoxysilane or vinyltrimethoxysilane.

21. A method as set forth in clam 15, **CHARACTERIZED in that** the polyethylene-containing film of the outer envelope incorporates also an adhesive.

22. A method as seth forth in claim 21, **CHARACTERIZED in that** used as the adhesive is an ethylene copolymer taken in an amount of 3-8 wt.% of the weight of the polyethylene-containing film of the inner envelope.

23. A method as set forth in claim 18, **CHARACTERIZED in that** use is made of benzoyl peroxide taken in an amount of 1.5 wt.%, or dicumyl peroxide taken in an amount of 0.5 wt.%, or lauryl peroxide taken in an amount of 3 wt.%, and that at the first stage of the heat-treatment process the heat-transfer agent, that is, saturated steam has a temperature of 101°, 105°, 107°C and a pressure of 0.001, 0.005, 0.02 MPa for 5, 10, and 15 min, respectively, and at the second stage of said process said heat-transfer agent has a temperature of 101°, 105°, 107°C and a pressure of 0.045, 0.075, 0.06 MPa for 4, 5.5, and 5 h, respectively.

24. A method as set forth in claim 20, **CHARACTERIZED in that** use is made of vinyltriethoxysilane taken in an amount of 5 wt.%, or vinyltrimethoxysilane taken in an amount of 0.5 wt.%, and that at the first stage of the heat-treatment process the heat-transfer agent, that is, saturated steam has a temperature of 105°, 107°C and a pressure of 0.005, 0.02 MPa for 10 and 20 min, respectively, and at the second stage of said process said heat-transfer agent has a temperature of 105°, 107°C and a pressure of 0.075, 0.06 MPa for 5.5 and 5 h, respectively.

25. A method as set forth in claim 23, **CHARACTERIZED in that** use is made of benzoyl peroxide taken in an amount of 1.5 wt.% and an ethylenebutylene copolymer taken in an amount of 8 wt.%, and that at the first stage of the heat-treatment process the heat-transfer agent, that is, saturated steam has a temperature of 101°C and a pressure of 0.001 MPa for 5 min, and at the second stage of said process said heat-transfer agent has a temperature of 101°C and a pressure of 0.045 MPa for 4 h.

## Patentansprüche

1. Beschichtung der Innenfläche einer Rohrleitung, eine Triplexstruktur (1) darstellend, zwei koaxial liegende Röhrenhüllen (2, 3) aus PE-haltiger Folie enthaltend, von denen eine - die äußere (2) an die innere Fläche (4) der Rohrleitung (5) anliegt, und die andere - die innere davon durch eine koaxiale bewehrende Schicht (6) getrennt ist, die mit einem Bindemittel durchtränkt ist, **dadurch gekennzeichnet, daß** wenigstens die Innenhülle (3) aus PE-haltiger Folie ein Vernetzungsmittel enthält, wodurch die Innenhülle mit der bewehrenden Schicht ( 6 ) starr verbunden durch die chemischen Querverbindungen ist, die von den zwei anliegenden Schichten gebildet sind.

2. Beschichtung nach Anspruch 1, **dadurch gekennzeichnet, daß** die PE-haltige Folie der Außenhülle (3) ein Vernetzungsmittel enthält, das imstande ist, die chemischen Querverbindungen mit dem Bindemittel zu bilden.

3. Beschichtung nach Anspruch 1, **dadurch gekennzeichnet, daß** die PE-haltige Folie der Innenhülle (3) ein Klebemittel enthält.

4. Beschichtung nach Anspruch 2, **dadurch gekennzeichnet, daß** die PE-haltige Folie der Außenhülle (3) zusätzlich ein Klebemittel enthält.

5. Beschichtung nach Anspruch 1, **dadurch gekennzeichnet, daß** als Vernetzungsmittel Peroxid organischer Stoffe in einer Menge von 0,5-3 Gew.-% der PE-haltigen Folie benutzt wird.

6. Beschichtung nach Anspruch 2, **dadurch gekennzeichnet, daß** als Vernetzungsmittel Peroxid organischer Stoffe in einer Menge von 0,5-3 Gew.-% vom Gewicht der PE-haltigen Folie benutzt wird.

7. Beschichtung nach Anspruch 5 oder 6, **dadurch gekennzeichnet, daß** das Bindemittel Peroxid organischer Stoffe in einer Menge von 0,5-3 Gew.-% vom Gewicht des Bindemittels enthält.

8. Beschichtung nach Anspruch 5 oder 6, **dadurch gekennzeichnet, daß** als Peroxid organischer Stoffe entweder Benzoyl-, oder Dikumyl-, oder Laurylperoxid benutzt werden.

9. Beschichtung nach Anspruch 7, **dadurch gekennzeichnet, daß** als Peroxid organischer Stoffe entweder Benzoyl-, oder Dikumyl-, oder Laurylperoxid ausgenutzt werden.

10. Beschichtung nach Anspruch 1, **dadurch gekennzeichnet, daß** als Vernetzungsmittel ungesättigtes Silan in einer Menge von 0,5-15 Gew.-% vom Gewicht der PE-haltigen Folie benutzt wird.

11. Beschichtung nach Anspruch 2, **dadurch gekennzeichnet, daß** als Vernetzungsmittel ungesättigtes Silan in einer Menge von 0,5-15 Gew.-% vom Gewicht der PE-haltigen Folie benutzt wird.

12. Beschichtung nach Anspruch 10 oder 11, **dadurch gekennzeichnet, daß** als ungesättigtes Silan Vinyltriethoxysilan oder Vinyltrimethoxysilan benutzt wird.

13. Beschichtung nach Anspruch 3 oder 4, **dadurch gekennzeichnet, daß** als Klebemittel ein Copolymer von Ethylen in einer Menge von 3-8 Gew.-% vom Gewicht der PE-haltigen Folie benutzt wird.

14. Verfahren zum Auftragen einer Beschichtung auf die Innenfläche einer Rohrleitung, darin bestehend, daß man außerhalb der Rohrleitung (5) koaxial zwei Röhrenhüllen (2, 3) aus PE-haltiger Folie anordnet, von denen die erste - die äußere (2) fürs Anliegen an die Innenfläche (4) der Rohrleitung (5) bestimmt ist, und die andere - die innere (3) davon durch eine koaxiale bewehrende Schicht (6) getrennt ist, die dann mit einem Bindemittel durchtränkt wird, so daß eine Triplexstruktur (1) der Beschichtung erhalten wird, man dann die erhaltene Triplexstruktur (1) der Beschichtung ins Innere der Rohrleitung (5) einführt, wonach man ein Hermetisieren des Raums (8) der Innenhülle (3) und eine Thermobehandlung der Triplexstruktur (1) der Beschichtung ausführt, **dadurch gekennzeichnet, daß** die Innenhülle (3) der Beschichtung aus einer PE-haltigen Folie gebildet wird, die ein Vernetzungsmittel enthält, um die Innenhülle (3) fest mit der bewehrenden Schicht (6) durch chemische Querverbindungen zu verbinden, die zwischen zwei anliegenden Schichten entstehen, und man die thermische Behandlung der Triplexstruktur (1) der Beschichtung bei einer Temperatur von 85°-120°C und unter Druck von 0,005-0,075MPa über eine für die Bildung der chemischen Querverbindungen zwischen der Innenhülle (3) und der bewehrenden Schicht (6) ausreichende Zeit durchführt.

15. Verfahren nach Anspruch 14, **dadurch gekennzeichnet, daß** die thermische Behandlung in zwei Stufen durchgeführt wird, wobei in der ersten Stufe der Druck auf 0,005-0,035 MPa über 5-30 Min., und in der zweiten Stufe auf 0,045-0,075 MPa über 2,5-5,5 Std. gehalten wird.

16. Verfahren nach Anspruch 15, **dadurch gekennzeichnet, daß** als Vernetzungsmittel Peroxid organischer Stoffe in einer Menge von 0,3-3 Gew.-% vom Gewicht PE-haltiger Folie der Innenhülle benutzt wird.

17. Verfahren nach Anspruch 15, **dadurch gekennzeichnet, daß** das Bindemittel Peroxid organischer Stoffe in einer Menge von 0,5-3 Gew.-% vom Gewicht des Bindemittels enthält.

18. Verfahren nach Anspruch 16 oder 17, **dadurch gekennzeichnet, daß** als Peroxid der organischen Stoffe entweder Benzoyl-, oder Dikumyl-, oder Laurylperoxid benutzt wird.

19. Verfahren nach Anspruch 15, **dadurch gekennzeichnet, daß** man als Vernetzungsmittel ein ungesättigtes Silan in einer Menge von 0,5-15 Gew.-% vom Gewicht der PE-haltigen Folie benutzt.

20. Verfahren nach Anspruch 19, **dadurch gekennzeichnet, daß** als ungesättigtes Silan Vinyltriethoxysilan oder Vinyltrimethoxisilan benutzt wird.

21. Verfahren nach Anspruch 15, **dadurch gekennzeichnet, daß** die PE-haltige Folie der Außenhülle zusätzlich ein Klebemittel enthält.

22. Verfahren nach Anspruch 21, **dadurch gekennzeichnet, daß** als Klebemittel ein Copolymer von Ethylen in einer Menge von 3-8 Gew.-% vom Gewicht der PE-haltigen Folie der Innenhülle benutzt wird.

23. Verfahren nach Anspruch 18, **dadurch gekennzeichnet, daß** man Benzoylperoxid in einer Menge von 1,5 Gew.-% oder Dikumylperoxid in Menge von 0,5 Gew.-% oder Laurylperoxid in einer Menge von 3 Gew.-% benutzt und die Thermobehandlung in der ersten Stufe bei einer Temperatur des Warmeträgers, nämlich des gesättigten Wasserdampfes von 101°C, 105°C, 107°C und unter einem Druck von 0,001 MPa, 0,005 MPa, 0,02 MPa über 5, 10 und 15 Min. jeweils durchführt, und in der zweiten Stufe des Prozesses der Wärmeträger eine Temperatur von 101°C, 105°C, 107°C und einen Druck von 0,045, 0,075, 0,06 MPa über 4, 5,5 und 5 Std. jeweils hat.

24. Verfahren nach Anspruch 20, **dadurch gekennzeichnet, daß** man Vinyltriethoxysilan in einer Menge von 5 Gew.-% oder Vinyltrimethoxysilan in Menge von 0,5 Gew.-% benutzt, und man die Thermobehandlung in der ersten Stufe bei einer Temperatur des Warmeträgers, nämlich des gesättigten Wasserdampfes von 105°C, 107°C und einem Druck von bzw. 0,005 MPa, 0,02 MPa über 10 Min. und 20 Min. jeweils, und in der zweiten Stufe bei einer Temperatur von 105°C, 107°C und einem Druck von 0,075 MPa, 0,06 MPa über 5,5 Std. und 5 Std. jeweils durchführt.

25. Verfahren nach Anspruch 23, **dadurch gekennzeichnet, daß** man Benzoylperoxid in einer Menge von 1,5 Gew.-% und ein Copolymer von Ethylenbutylen in einer Menge von 8 Gew.-% benutzt, und die ThermoBehandlung in der ersten Stufe bei einer Temperatur des Warmeträgers, nämlich des gesättigten Wasserdampfes von 101°C und einem Druck von 0,001 MPa über 5 Min., und in der zweiten Stufe bei einer Temperatur von 101°C bei einem Druck von 0,045 MPa über 4 Std. durchführt.

## Revendications

1. Revêtement d'une surface intérieure d'une tuyauterie réalisé en forme d'une structure à trois couches (1) comprenant deux enveloppes (2,3), réalisées à partir d'une pellicule contenant le polyéthylène et disposées coaxialement, l'une desdites enveloppes est une enveloppe extérieure (2) et s'applique à la surface intérieure (4) de la tubulure (5) et l'autre enveloppe sert de l'enveloppe intérieure et est séparée de celle-ci par une couche de renforcement coaxiale (6) imprégnée d'un liant, **caractérisé en ce qu'**au moins l'enveloppe intérieure (3) en pellicule contenant le polyéthylène comprend un agent liant par l'intermédiaire duquel l'enveloppe intérieure (3) est relié rigidement à la couche de renforcement (6) par les liaisons chimiques transversales, formées par deux couches, formées par deux couches adjacentes.

2. Revêtement selon la revendication 1, **caractérisé en ce que** la pellicule, contenant le polythéne, de l'enveloppe intérieure (3) comprend un agent liant susceptible de former les liaisons chimiques transversales avec le liant.

3. Revêtement selon l'une quelconque des revendications 1 ou 2, **caractérisé en ce que** la pellicule contenant le polyéthylène de l'enveloppe extérieure (2) comprend un agent adhésif.

4. Revêtement selon la revendication 2, **caractérisé en ce que** la pellicule contenant le polyéthylène de l'enveloppe intérieure (3) comprend supplémentairement un agent adhésif que l'on utilise en qualité de l'agent liant un peroxyde des composés organiques , pris en quantité de 0,5 à 3 % au poids par rapport au poids de la pellicule contenant le polyéthylène.

5. Revêtement selon la revendication 3, **caractérisé en ce que** la pellicule contenant le polyéthylène de l'enveloppe extérieure (2) comprend supplémentairement un agent adhésif.

6. Revêtement selon la revendication 2, **caractérisé en ce que** l'on utilise, en qualité de l'agent liant, le peroxyde des composés organiques en quantité de 0,5 à 3 % en poids par rapport au poids de la pellicule contenant le polyéthylène.

7. Revêtement selon l'une quelconque des revendications 5 ou 6, **caractérisé en ce que** l'on utilise en qualité de l'agent liant le peroxyde des composés organiques en quantité de 0,5 à 3 % en poids par rapport au poids du liant.

8. Revêtement selon l'une quelconque des revendications 5 ou 6, **caractérisé en ce que** l'on utilise, en qualité du peroxyde des composés organiques, le peroxyde de benzoyle, le peroxyde de dicoumyle ou le peroxyde de lauryle.

9. Revêtement selon l'une quelconque des revendications 6 ou 7, **caractérisé en ce que** l'on utilise le peroxyde de benzoyle ou le peroxyde de dicoumyle ou le peroxyde de lauryle en qualité des composés organiques.

10. Revêtement selon l'une quelconque des revendications 6 ou 7, **caractérisé en ce que** que l'on utilise en qualité du liant le silane insaturé en quantité de 0,5 à 15 % en poids par rapport au poids de la pellicule contenant le polyéthylène.

11. Revêtement selon la revendication 2, **caractérisé en ce que** l'on utilise, en qualité de l'agent liant, le silane insaturé en quantité de 0,5 à 15 % en poids par rapport au poids de la pellicule contenant le polyéthylène.

12. Revêtement selon l'une quelconque des revendications 10 ou 11, **caractérisé en ce que** l'on utilise en qualité du liant, au lieu du silane insaturé, le vinyltriéthoxysilane ou le vinytriméthoxysilane.

13. Revêtement selon l'une quelconque des revendications 3 ou 4, **caractérisé en ce que** l'on utilise en qualité de l'agent liant, le copolymère de l'éthylène pris en quantité de 3 à 8 % en poids par rapport au poids de la pellicule contenant le polyéthylène.

14. Procédé pour appliquer un revêtement sur la surface intérieure d'une tuyauterie consistant à placer à l'extérieur de la tuyauterie (5) de façon coaxiale les enveloppes tubulaires (2,3), réalisées à partir d'une pellicule contenant le polyéthylène, l'une desdites enveloppes est l'enveloppe extérieure (2) qui est destinée à s'appliquer à la surface intérieure (4) de la tuyauterie (5) et l'autre enveloppe est l'enveloppe intérieure (3) et est séparée de celle-ci par une couche de renforcement coaxiale (6), à imprégner cette dernière d'un liant et à former une structure (1) à trois couches du revêtement, ensuite, à introduire la structure à trois couches (1) ainsi constituée du revêtement à l'intérieur de la tuyauterie (5), après cela, à étanchéfier la cavité (8) de l'enveloppe intérieure (3) et à réaliser le traitement thermique de la structure (1) à trois couches du revêtement, **caractértisé** en ce que l'on utilise, en qualité de l'enveloppe intérieure (3) du revêtement une pellicule contenant le polyéthylène qui contient l'agent liant, destiné pour la liaison rigide de l'enveloppe intérieure (3) avec la couche de renforcement (6) par l'intermédiaire des liaisons chimiques transversales formées par deux couches adjacentes et en ce que le traitement thermique de la structure à trois couches (1) du revêtement est réalisé à la température de 85 à 120 C et à la pression de 0,005 à 0,075 MPa pendant une durée suffisante à la formation des liaisons chimiques transversales entre l'enveloppe intérieure (3) et la couche de renforcement (6).

15. Procédé selon la revendication 14, **caractérisé en ce que** l'on réalise traitement thermique en deux étapes, en maintenant la pression pendant la première étape dans les limites entre 0,005 et 0,03 MPa pendant 5 à 30 minutes et pendant la deuxième étape dans les limites entre 0,045 et 0,075 MPa pendant 2,5 à 5,5 heures.

16. Procédé selon la revendication 16, **caractérisé en ce que** l'on utilise en qualité de l'agent liant le peroxyde des composés inorganiques en quantité de 0,5 à 3 % en poids par rapport au poids de la pellicule contenant le polyéthylène du la pellicule intérieure.

17. Procédé selon la revendication 15, **caractértisé** le liant comprend le peroxyde des composés inorganiques en quantité de 0,5 à 3 % en poids par rapport au poids du liant.

18. Procédé selon l'une quelconque des revendications 16 ou 17, **caractérisé en ce que** l'on utilise en qualité du peroxyde des composés inorganiques, le peroxyde de benzoyle, ou le peroxyde de dicoumyle, ou le peroxyde de lauryle.

19. Procédé selon la revendication 15, **caractérisé en ce que** l'on utilise en qualité de l'agent liant le silane insaturé en quantité de 0,5 à 15% en poids par rapport au poids de la pellicule contenant contenant le polyéthylène de la pellicule intérieure.

20. Procédé selon la revendication 15, **caractérisé en ce que** l'on utilise en qualité du silane insaturé, le vinyltriéthoxysilane ou le vinyltriméthoxysilane.

21. Procédé selon la revendication 15, **caractérisé en ce que** la pellicule contenant le polyéthylène de l'enveloppe extérieure contient, en outre, un agent adhésif.

22. Procédé selon la revendication 22, **caractérisé en ce que** l'on utilise en qualité de l'agent adhésif un copolymère de l'éthylène en quantité de 3 à 8 % en poids par rapport au poids de la pellicule contenant le polyéthylène de l'enveloppe intérieure.

23. Procédé selon la revendication 18, **cactérisé** en ce que l'on utilise le peroxyde de benzoyle en quantité de 1,5 % en poids ou le peroxyde de dicoumyle en quantité de 0,5 % en poids ou le peroxyde de lauryle en quantité de 3 % en poids et en ce que l'on réalise le traitement thermique pendant la première étape à la température du caloporteur en qualité duquel on utilise la vapeur d'eau saturée à la température de 101 C, 105 C, 107 C et à la pression de 0,0001 MPa, 0,005 MPa, 0,02 MPa pendant 5 miinutes, 10 minutes, 20 minutes respectivement et, pendant la deuxième étape, on le réalise à la température de 101 C, 105 C, 107 et à la pression de 0,045 MPa, 0,075 MPa, 0,06 MPa pendant 4 heures, 5,5, heures, 5 heures respectivement.

24. Procédé selon la revendication 20, **caractérisé en ce que** l'on utilise le vinyltriéthoxysilane en quantité de 15 % en poids ou le vinyltriméthoxysilane en quantité de 0,5 % en poids et que l'on réalise le traitement thermique pendant la première étape à la température du caloporteur en qualité duquel on utilise la vapeur d'eau saturée à la température de 105 C, 107 C et la pression de 0,005 MPa, de 0,02 MPa pendant 10 minutes, 20 minutes respectivement et, pendant la deuxième étape, on le réalise à la température de 105 C, 107 C et à la pression de 0,075 MPa, 0,06 MPa pendant 5,5 heures, 5 heures respectivement.

25. Procédé selon la revendication 23, **caractérisé en ce que** que l'on utilise le peroxyde de benzoyle en quantité de 1,5 % en poids et le copolymère de l'éthylène butylène en quantité de 8 % en poids et que l'on réalise le traitement thermique pendant la première étape à la température du caloporteur en qualité duquel on utilise la vapeur d'eau saturée égale à 101 C et la la pression de 0,001 MPa pendant 5 minutes et pendant la deuxième étape à la température de 101 C et à la pression de 0,045 MPa pendant 4 heures.
